# EUROPÄISCHE PATENTSCHRIFT

(11) **EP 1 453 630 B1**
(45) Veröffentlichungstag und Bekanntmachung des Hinweises auf die Patenterteilung: **01.03.2006**
(21) Anmeldenummer: 02787836.2
(22) Anmeldetag: 27.11.2002
(51) Int. Cl.: B23B 31/26

(54) **SPANNVORRICHTUNG**
CLAMPING DEVICE
DISPOSITIF DE SERRAGE

(30) Priorität: 05.12.2001 DE 10159611
(43) Veröffentlichungstag der Anmeldung: 08.09.2004
(73) Patentinhaber: OTT-JAKOB GmbH & Co. Spanntechnik KG, 87663 Lengenwang (DE)
(72) Erfinder: JAKOB, Ludwig, 63839 Kleinwallstadt (DE); GREIF, Josef, 87654 Friesenried (DE)
(74) Vertreter: Schwarz, Thomas
(86) Internationale Anmeldenummer: PCT/EP2002/013331
(87) Internationale Veröffentlichungsnummer: WO 2003/047795

(56) Entgegenhaltungen:
- WO-A-94/08744
- US-A- 3 568 566
- US-A- 4 668 137
- US-A- 5 911 547

## Beschreibung

Die Erfindung betrifft eine Spannvorrichtung zur lösbaren Halterung eines mit einem Kegel-Hohlschaft versehenen ersten Maschinenteils an einem mit einem Innenkegel versehenen zweiten Maschinenteil nach dem Oberbegriff des Anspruchs 1.

Eine derartige Spannvorrichtung ist aus der DE 299 22 642 U1 bekannt. Dort sind innerhalb einer mit einem Innenkegel versehenen Arbeitsspindel mehrere zu einer Spannsegmentzange zusammengefaßte Spannklauen angeordnet, die an ihrem vorderen Ende schräge Spannflächen zur Anlage an korrespondierenden Spannschrägen an einer Ringnut im Inneren eines Kegel-Hohischafts aufweisen. In der Arbeitsspindel ist eine zusätzliche Haltezange angeordnet, an der sich parallel zu den Spannklauen erstreckende, in Radialrichtung federnde Haltezungen angeordnet sind. An den einzelnen Haltezungen sind zu den Spannschrägen korrespondierende schräge Halteflächen angeordnet, die in der Ruhestellung der Haltezungen an den Spannschrägen des Kegel-Hohlschafts anliegen. Durch die zusätzlichen Haltezungen wird der Kegel-Hohlschaft auch gehalten, wenn die Spannklauen noch nicht an den Spannschrägen zur Anlage kommen oder die Spannklauen bereits gelöst sind. Bei einer derartigen Spannvorrichtung muß allerdings die Form und Lage der schrägen Halteflächen an den Haltezungen genau auf die korrespondierenden Spannschrägen des Kegel-Hohlschafts abgestimmt sein, was eine genaue Fertigung und exakte Montage erfordert. Außerdem muß zum Herausnehmen des Kegel-Hohlschafts aus der Arbeitsspindel zunächst eine vergleichsweise hohe Zugkraft aufgebracht werden, um die in die Ringnut formschlüssig eingreifenden Haltezungen zur Freigabe des Kegel-Hohlschafts radial einwärts zu bewegen. Sobald die schrägen Halteflächen der Haltezungen außer Eingriff mit den Spannschrägen gelangen, wird das Werkzeug plötzlich freigegeben, wodurch die Haltekraft ruckartig abnimmt.

Aufgabe der Erfindung ist, eine Spannvorrichtung mit einer einfach montierbaren und kostengünstigen Zusatzhalterung zu schaffen, die eine einfache und zuverlässige Sicherung des ersten Maschinenteils auch bei gelösten Spannelementen ermöglicht.

Diese Aufgabe wird durch eine Spannvorrichtung mit den Merkmalen des Anspruchs 1 gelöst. Zweckmäßige Weiterbildungen und vorteilhafte Ausgestaltungen der Erfindung sind in den Unteransprüchen angegeben.

Ein wesentlicher Vorteil der erfindungsgemäßen Spannvorrichtung besteht darin, daß das mit einem Kegel-Hohlschaft versehene Maschinenteil über einen einfachen Reibschluß sicher gehalten wird. Die Klemmhülse mit den radial federnden Klemrnabschnitten ermöglicht eine großflächige und über den gesamten Umfang verteilte Anlage, wodurch neben einer sicheren Halterung auch eine genaue Zentrierung ermöglicht wird. Die Klemmabschnitte müssen keine an die Spannflächen des Kegel-Hohlschafts angepaßte Form zum Eingriff in eine entsprechende Ringnut aufweisen. Dadurch wird die Fertigung und Montage der Spannvorrichtung vereinfacht. Durch die reibschlüssige Anlage der Klemmbuchse an einer entsprechenden Innenfläche des Kegelhohlschafts kann außerdem eine ruckfreie Einführung oder Entnahme des mit dem Kegel-Hohlschaft versehenen Maschinenteils erreicht werden.

Die erfindungsgemäße Spannvorrichtung ist besonders zum automatischen Spannen von Werkzeugen an einer Werkzeugmaschine geeignet, wobei das erste Maschinenteil ein Hohlschaftwerkzeug oder eine Hohlschaft-Werkzeugaufnahme und das zweite Bauteil eine Arbeitsspindel der Werkzeugmaschine ist. Durch die Klemmbuchse wird das Werkzeug noch sicher in der Arbeitsspindel gehalten, wenn bereits die eigentlichen Spannsegmente zur Freigabe des Werkzeugs in eine Lösestellung bewegt sind. Der eigentliche Spannmechanismus kann daher bereits während der Verfahrbewegung der Arbeitsspindel in eine Werkzeugwechselposition oder bereits vor dem Angriff eines automatischen Werkzeuggreifers am auszuwechselnden Werkzeug gelöst werden, wodurch schnellere Werkzeugwechselzeiten ermöglicht werden. Die Spannvorrichtung ist jedoch auch zur Verbindung anderer Maschinenteile verwendbar, wie z.B. zur lösbaren Befestigung eines Bearbeitungsaggregats an einem Maschinenschlitten oder zur Verbindung einer Werkstückaufspannvorrichtung mit einem Maschinentisch.

In einer zweckmäßigen Ausführungsform der Erfindung weist die Klemmhülse mehrere in deren Längsrichtung verlaufende und in Umfangsrichtung voneinander beabstandete Längsschlitze auf, zwischen denen die radial federnden Klemmabschnitte gebildet sind. Eine derartige Klemmhülse ist einfach und kostengünstig herstellbar.

In einer weiteren Ausführungsform der Erfindung besteht die Klemmhülse aus zwei über ein konisches Gewinde verschraubbaren Teilen. An dem mit einem Innengewinde versehenen äußeren Teil sind die Klemmflächen vorgesehen. Bei dieser Ausführung kann der Anpreßdruck der Klemmhülse durch Drehung eines der beiden Teile auf einfache Weise verändert und an die entsprechenden Anforderungen angepaßt werden.

Zweckmäßigerweise sind an der Klemmhülse Halteelemente vorgesehen, durch welche die Klemmhülse an den Spannsegmenten axial gesichert ist. Dadurch kann die Klemmhülse mit der gesamten Spannvorrichtung einfach montiert oder demontiert werden. Die Klemmhülse kann aber ebenso in dem zweiten Maschinenteil befestigt sein.

Weitere Besonderheiten und Vorzüge der Erfindung ergeben sich aus der folgenden Beschreibung eines bevorzugten Ausführungsbeispiels anhand der Zeichnung. Es zeigt:
- **Figur 1**: einen Längsschnitt einer erfindungsgemäßen Spannvorrichtung in einer Spannstellung;
- **Figur 2**: einen Längsschnitt einer erfindungsgemäßen Spannvorrichtung in einer Lösestellung;
- **Figur 3**: einen Abstandshalter der erfindungsgemäßen Spannvorrichtung
- **Figur 4**: den Abstandshalter von Figur 3 in einem Längsschnitt entlang der Linie A-A von Figur 3;
- **Figur 5**: eine erste Ausführungsform einer Klemmhülse in einer Perspektivansicht und
- **Figur 6**: eine zweite Ausführungsform einer Klemmhülse in einer geschnittenen Seitenansicht.

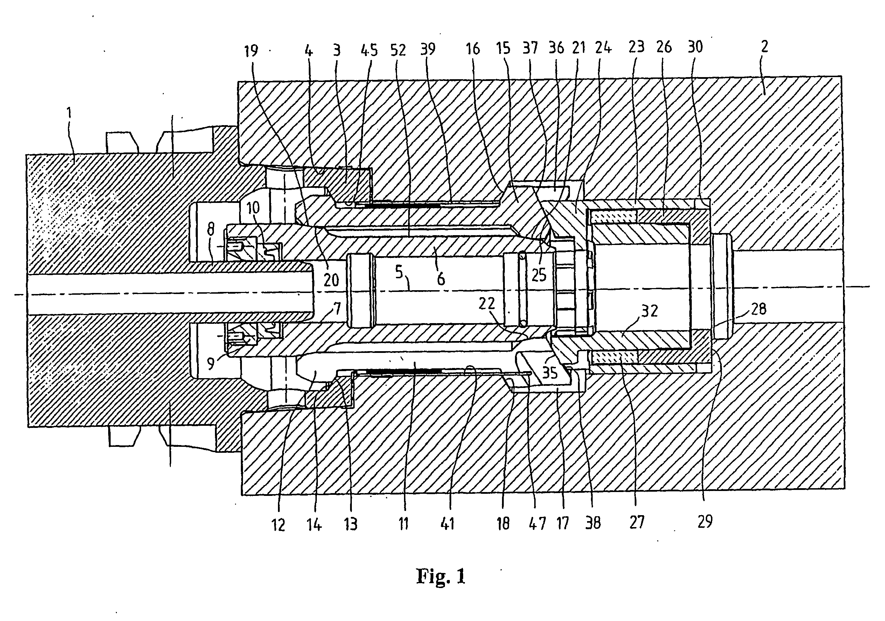

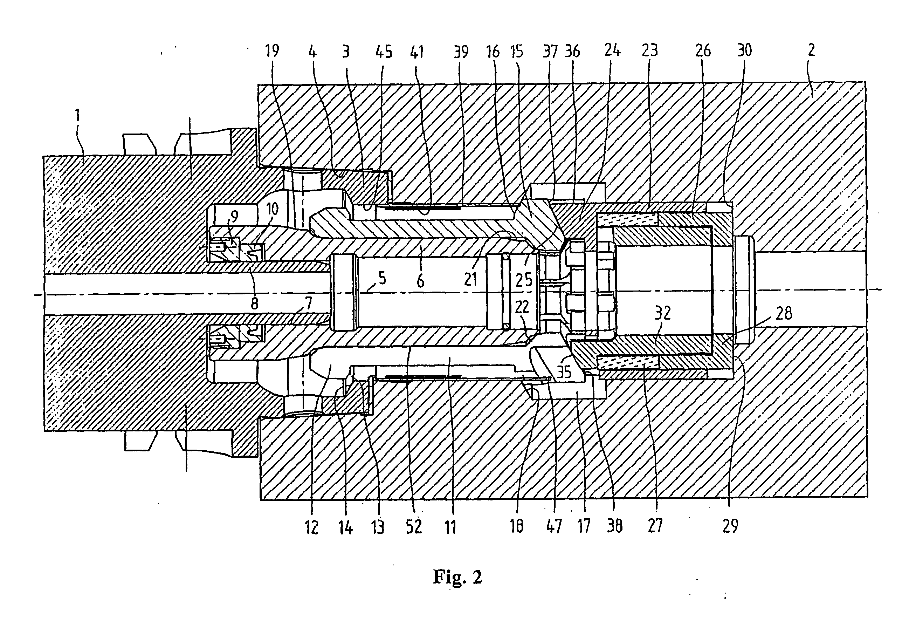

In den Figuren 1 und 2 ist eine Spannvorrichtung zur lösbaren Halterung eines Hohlschaftwerkzeugs 1 an einer Arbeitsspindel 2 einer Werkzeugmaschine in einer gespannten und einer gelösten Stellung gezeigt. Das Hohlschaftwerkzeug 1 enthält einen Kegel-Hohlschaft 3, der in Eingriff mit einem entsprechenden Innenkegel 4 am vorderen Ende der hohlzylindrischen Arbeitsspindel 2 gelangt.

Innerhalb der Arbeitsspindel 2 ist eine zu deren Mittelachse 5 konzentrische Spannhülse 6 angeordnet, die mit einer - nicht dargestellten - Betätigungsstange verschraubt und durch diese zwischen einer in Figur 1 gezeigten hinteren Klemmstellung und einer in Figur 2 dargestellten vorderen Lösestellung axial verschiebbar ist. Die Spannhülse 6 weist an ihrem dem Kegel-Hohlschaft 3 zugewandten vorderen Ende eine Bohrung 7 zur Aufnahme eines am Hohlschaftwerkzeug angeformten zentralen Anschlußzapfens 8 für die Zuführung eines Bearbeitungsfluids auf. Durch eine am vorderen Ende der Spannhülse 6 angeordnete und durch einen Ring 9 gesicherte Dichtung 10 wird der Anschlußzapfen 8 gegenüber der Spannhülse 6 abgedichtet.

An der Außenseite der Spannhülse 6 sind mehrere in Umfangsrichtung gleichbeabstandete Spannklauen 11 angeordnet, die sich parallel zur Mittelachse 5 erstrecken. Bei dem dargestellten Ausführungsbeispiel sind insgesamt sieben um die Mittelachse 5 konzentrisch angeordnete Spannklauen 11 vorgesehen. Die Spannklauen 11 weisen an ihrem dem Kegel-Hohlschaft 3 zugewandten vorderen Ende 12 eine radiale Verdickung mit einer durch einen konischen Flächenabschnitt gebildeten ersten Spannfläche 13 auf. Diese Spannfläche 13 liegt bei der in Figur 1 dargestellten Spannstellung an einer konischen Innenfläche 14 an der Innenseite des Kegel-Hohlschafts 3 an. Die konische Innenfläche 14 weist gegenüber der Längsachse des Kegel-Hohlschafts 3 denselben Neigungswinkel wie die erste Spannfläche 13 der Spannklauen 11 auf. An ihrem hinteren, radial erweiterte Ende 15 haben die Spannklauen 11 an der Außenseite eine zur vorderen Spannfläche 13 entgegengesetzt geneigte zweite Spannfläche 16, mit der sich die Spannklauen 11 an einer innerhalb einer Ringnut 17 der Arbeitsspindel 2 angeordneten konischen Gegenfläche 18 abstützen. Die zweite Spannfläche 16 der Spannklauen 11 ist ebenfalls durch einen konischen Flächenabschnitt gebildet und weist einen der Neigung der Gegenfläche 18 entsprechenden Neigungswinkel auf.

Die Spannhülse 6 hat an der Außenseite ihres dem Kegel-Hohlschaft 3 zugewandten vorderen Endes erste konische Spannflächenbereiche 19, an denen eine entsprechende Innenfläche 20 am vorderen Ende 12 der Spannklauen 11 zur Auflage gelangt. An dem hinteren Ende der Spannhülse 6 sind an deren Außenseite zweite konische Spannflächenbereiche 21 vorgesehen, an denen eine korrespondierende Innenfläche 22 am hinteren Ende der Spannklauen 11 zur Auflage kommt. Die Spannflächenbereiche 19 und 21 der Spannhülse 6 und die korrespondierenden Innenflächen 20 und 22 der Spannklauen 11 sind derart aufeinander abgestimmt, daß die Spannklauen 11 durch Axialbewegung der Spannhülse 6 in einer zur Mittelachse 5 der Arbeitsspindel 2 parallelen Stellung radial nach außen oder innen verschoben werden. Zu weiteren konstruktiven Einzelheiten der Spannklauenanordnung wird auf die europäische Patentanmeldung EP 0 471 197 A1 verwiesen, auf deren Offenbarungsgehalt ausdrücklich Bezug genommen wird.

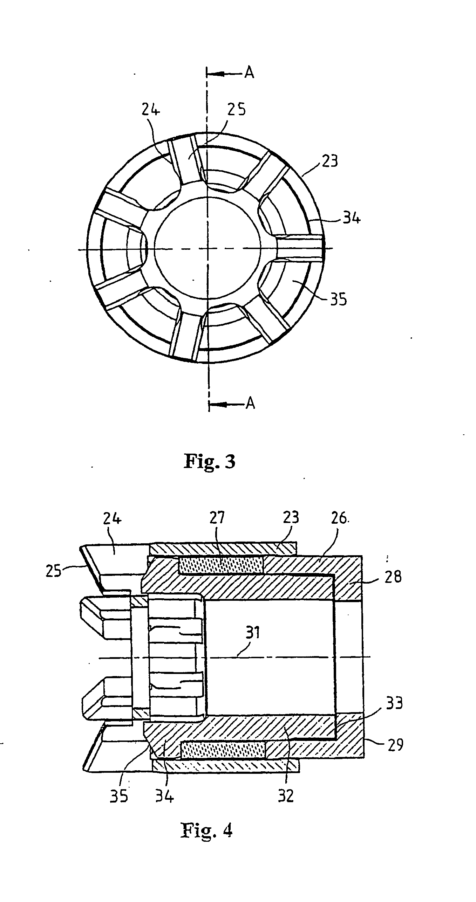

An die hinteren Enden der Spannklauen 10 anschließend ist innerhalb der Arbeitsspindel 2 ein in den Figuren 3 und 4 einzeln dargestellter Abstandshalter angeordnet. Dieser enthält eine radial äußere buchsenartige Halterung 23, die an ihrem den Spannklauen 11 zugewandten Ende sieben in Axialrichtung vorstehende Ansätze 24 mit abgeschrägten Stirnflächen 25 aufweist. Die Halterung 23 ist auf einer Buchse 26 verschiebbar und durch eine Druckfeder 27 beaufschlagt montiert. Die Buchse 26 hat an ihrem hinteren Ende eine Ringschulter 28 und liegt mit ihrer hinteren Stirnfläche 29 an einer Ringfläche 30 im Inneren der Arbeitsspindel 2 an. Innerhalb der Buchse 26 ist eine zu deren Längsachse 31 konzentrische Hülse 32 angeordnet, die mit ihrer hinteren Stirnfläche 33 an der Ringschulter 28 anliegt und an ihrem vorderen Ende sieben zwischen die Ansätze 24 der Halterung 23 ragende Ringsegmente 34 mit schrägen Anlageflächen 35 aufweist.

Wie aus Figur 1 hervorgeht, greifen die Ansätze 24 der Halterung 23 in eine Nut 36 an dem hinteren Ende der Spannklauen 11 ein und liegen mit ihrer abgeschrägten Stirnfläche 25 an einer entsprechenden schrägen Gegenfläche 37 im Grund der Nut 36 an. Die Hülse 32 liegt mit ihren schrägen Anlageflächen 35 an einer Abschrägung 38 am hinteren Ende der Spannklauen 11 an. Die Abschrägung 38 weist eine entgegengesetzte Neigung zur schrägen Gegenfläche 37 auf.

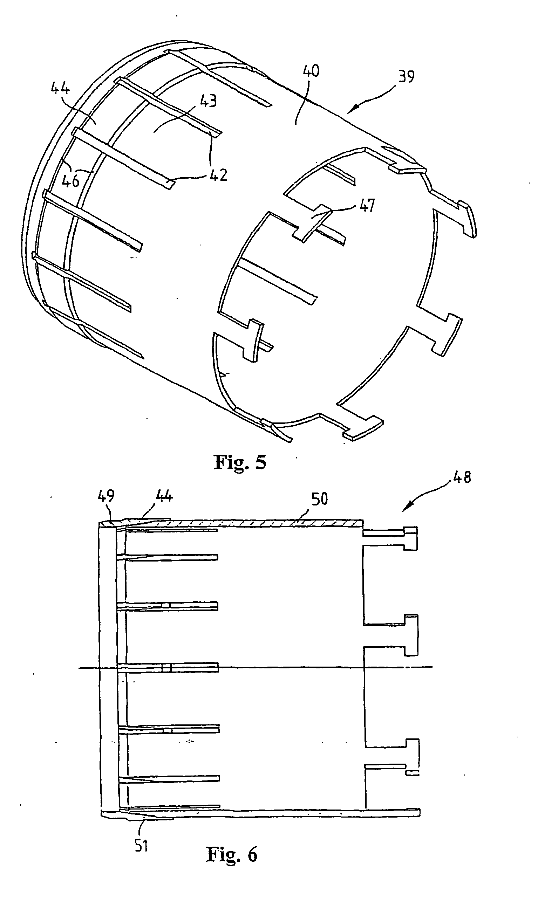

Radial außerhalb der Spannklauen 1 ist eine zur Mittelachse 5 der Arbeitsspindel 2 konzentrische Klemmhülse 39 angeordnet, die in Figur 5 in einer Perspektive dargestellt ist. Die Klemmhülse 39 hat einen hinteren zylindrischen Bereich 40, der in einer entsprechenden Bohrung 41 im Inneren der Arbeitsspindel 2 angeordnet ist. Die Klemmhülse 39 enthält mehrere in deren Längsrichtung verlaufende und in Umfangsrichtung gleichmäßig verteile Längsschlitze 42, zwischen denen im Radialrichtung federnde Klemmabschnitte 43 gebildet sind. Die Klemmabschnitte 43 haben eine gegenüber dem hinteren Bereich erhöhte Klemmfläche 44, die zur Anlage an einem zylindrischen Abschnitt 45 an der Innenseite des Kegel-Hohlschafts 3 gelangt. Sämtliche Klemmflächen 44 der Klemmabschnitte 43 bilden eine durch die Längsschlitze unterbrochene Ringfläche, die bei eingesetztem Hohlschaftwerkzeug 1 am zylindrischen Abschnitt 45 anliegt. Im Bereich der über den Umfang gleichmäßig verteilten Klemmflächen 44 ist der Außendurchmesser der Klemmhülse 39 im nicht eingedrückten Zustand der Klemmabschnitte 43 größer als der Innendurchmesser des zylindrischen Abschnitts 45. Dadurch liegen die federnden Klemmabschnitte 43 mit ihren Klemmflächen 44 bei eingesetztem Hohlschaftwerkzeug 1 unter Spannung an dem zylindrischen Abschnitt 45 an, wodurch das Hohlschaftwerkzeug 1 mit Reibschluß auch dann innerhalb der Arbeitsspindel 2 gehalten wird, wenn die Spannklauen 11 gelöst sind. Um den Einschub bzw. die Entnahme des Hohlschaftwerkzeugs 1 zu erleichtern, sind an den Rändern der Klemmflächen 44 schräge Auflaufflächen 46 vorgesehen. Die Klemmhülse 39 weist an ihrem hinteren Ende außerdem sieben in Umfangsrichtung gleichbeabstandete T-förmige gebogene Ansätze 47 auf, die mit ihren seitlichen Vorständen die Spannklauen 11 hintergreifen und dadurch eine axiale Fixierung der Klemmhülse 39 gewährleisten.

Eine in Figur 6 dargestellte zweite Ausführungsform einer Klemmhülse 48 besteht aus zwei gegeneinander verschiebbaren geschlitzten Teilen 49 und 50, die durch ein konisches Gewinde 51 miteinander verschraubt sind. An dem mit dem Innengewinde versehenen vorderen Teil 49 sind die Klemmflächen 44 und an dem mit dem Außengewinde versehenen hinteren Teil 50 sind die T-förmigen Ansätze 47 vorgesehen. Bei dieser Ausführung kann der Außendurchmesser der Klemmbuchse 48 im Bereich der Klemmflächen 44 durch einfache Drehung eines der beiden Teile 49 oder 50 verändert und so die Klemmkraft auf einfache Weise an die entsprechenden Anforderungen angepaßt werden.

Die Wirkungsweise der erfindungsgemäßen Spannvorrichtung ist wie folgt:

Wenn die Spannhülse 6 von einer nicht dargestellten Betätigungsstange aus der in Figur 1 gezeigten Spannstellung in die gemäß Figur 2 dargestellte Lösestellung verschoben wird, werden die Spannklauen 11 durch die schrägen Stirnflächen 25 der durch die Druckfeder 27 beaufschlagten Halterung 23 radial nach innen gedrückt, bis sie an einem zylindrischen Mittelteil 52 der Spannhülse 6 aufliegen. In dieser Stellung wird auch der Kegel-Hohlschaft 3 von den vorderen Enden 12 der Spannklauen 11 freigegeben. Der Kegel-Hohlschaft 3 wird jedoch auch weiterhin durch die Klemmhülse 39 gehalten, deren radial federnde Klemmabschnitte 43 mit den Anlageflächen 44 unter Druck an dem zylindrischen Abschnitt 45 anliegen. Das Hohlschaftwerkzeug 1 ist so auch bei gelösten Spannklauen noch sicher gehalten und gegen Herausfallen gesichert.

Der eigentliche Spannmechanismus kann daher bereits vor dem Eingriff einer automatischen Werkzeugwechseleinrichtung an dem Hohlschaftwerkzeug 1 gelöst werden, wodurch eine Reduzierung der Werkzeugwechselzeiten ermöglicht wird.

## Patentansprüche

1. Spannvorrichtung zur lösbaren Halterung eines mit einem Kegel-Hohlschaft (3) versehenen ersten Maschinenteils (1) an einem mit einem Innenkegel (4) versehenen zweiten Maschinenteil (2), die eine in dem zweiten Maschinenteil (2) axial verschiebbare Spannhülse (6) und mehrere der Spannhülse (6) zugeordnete und durch deren Axialbewegung radial verschiebbare Spannklauen (11) mit einer Spannfläche (13) zur Anlage an einer konischen Innenfläche (14) des Kegel-Hohlschafts (3) enthält, **dadurch gekennzeichnet, daß** in dem zweiten Maschinenteil (2) radial außerhalb der Spannklauen eine Klemmhülse (39; 48) mit radial federnden Klemmabschnitten (43) zur reibschlüssigen Halterung des ersten Maschinenteils (1) angeordnet ist.

2. Spannvorichtung nach Anspruch 1, **dadurch gekennzeichnet, daß** die Klemmhülse (39; 48) mehrere in deren Längsrichtung verlaufende und in Umfangsrichtung voneinander beabstandete Längsschlitze (42) enthält, zwischen denen die radial federnden Klemmabschnitte (43) gebildet sind.

3. Spannvorrichtung nach Anspruch 2, **dadurch gekennzeichnet, daß** die Klemmabschnitte (43) eine erhöhte Anlagefläche (44) zur reibschlüssigen Anlage an einer Innenfläche (45) innerhalb des Kegel-Hohlschafts (3) aufweisen.

4. Spannvorrichtung nach Anspruch 3, **dadurch gekennzeichnet, daß** die Anlageflächen (44) der Klemmabschnitte (43) eine durch die Längsschlitze (42) unterbrochene Ringfläche bilden, die zur Anlage an einer zylindrischen Innenfläche (45) im Inneren des Kegel-Hohlschafts (3) gelangt.

5. Spannvorrichtung nach Anspruch 4, **dadurch gekennzeichnet, daß** der Außendurchmesser der Klemmhülse (38; 41) im Bereich der Anlageflächen (44) bei nicht eingesetztem ersten Maschinenteil (1) größer ist als der Innendurchmesser des Kegel-Hohlschafts (3) im Bereich der zylindrischen Innenfläche (45).

6. Spannvorrichtung nach einem der Ansprüche 1 bis 5, **dadurch gekennzeichnet, daß** der Anpreßdruck der Klemmabschnitte (43) an das erste Maschinenenteil (1) einstellbar ist.

7. Spannvorrichtung nach einem der Ansprüche 1 bis 6, **dadurch gekennzeichnet, daß** die Klemmhülse (48) aus zwei gegeneinander verschiebbar geschlitzten Teilen (49, 50) besteht, die durch ein konisches Gewinde (51) miteinander verschraubt sind.

8. Spannvorrichtung nach einem der Ansprüche 1 bis 7, **dadurch gekennzeichnet, daß** die Klemmhülse (39; 48) an ihrem hinteren Ende mehrere in Umfangsrichtung beabstandete Halteansätze (47) zur axialen Fixierung der Klemmhülse (39; 48) in dem zweiten Maschinenteil (2) aufweist.

9. Spannvorrichtung nach einem der Ansprüche 1 bis 8, **dadurch gekennzeichnet, daß** das erste Maschinenteil (1) ein Hohlschaftwerkzeug oder eine Hohlschaft-Werkzeugaufnahme und das zweite Maschinenteil (2) eine Arbeitsspindel einer Werkzeugmaschine ist.

## Claims

1. Clamping device for detachable mounting of a first machine part (1) provided with a tapering hollow shank (3) on a second machine part (2) provided with an internal taper (4), which device comprises a clamping sleeve (6) which is displaceable axially in the second machine part (2), and a plurality of clamping claws (11) which are associated with the clamping sleeve (6) and displaceable radially through its axial movement and have a clamping face (13) for bearing on a tapering internal face (14) of the tapering hollow shank (3), **characterised in that** a gripping sleeve (39; 48) with radially resilient gripping portions (43) for frictional mounting of the first machine part (1) is arranged in the second machine part (2) radially outside the clamping claws.

2. Clamping device according to claim 1, **characterised in that** the gripping sleeve (39; 48) comprises a plurality of longitudinal slots (42) which run in the longitudinal direction thereof and are spaced in the circumferential direction and between which the radially resilient gripping portions (43) are formed.

3. Clamping device according to claim 2, **characterised in that** the gripping portions (43) exhibit a raised contact face (44) for frictional bearing on an internal face (45) inside the tapering hollow shank (3).

4. Clamping device according to claim 3, **characterised in that** the contact faces (44) of the gripping portions (43) form an annular face which is interrupted by the longitudinal slots (43) and comes to bear on a cylindrical internal face (45) in the interior of the tapering hollow shank (3).

5. Clamping device according to claim 4, **characterised in that** the outside diameter of the gripping sleeve (38; 41) in the area of the contact faces (44) when the first machine part (1) is not inserted is greater than the inside diameter of the tapering hollow shank (3) in the area of the cylindrical internal face (45).

6. Clamping device according to one of claims 1 to 5, **characterised in that** the contact pressure of the gripping portions (43) on the first machine part (1) is adjustable.

7. Clamping device according to one of claims 1 to 6, **characterised in that** the gripping sleeve (48) consists of two slotted parts (49, 50) which are displaceable against one another and are screwed to one another by a tapering thread (51).

8. Clamping device according to one of claims 1 to 7, **characterised in that** at its rear end the gripping sleeve (39; 48) exhibits a plurality of holding projections (47) which are spaced in the circumferential direction for axial fixture of the gripping sleeve (39; 48) in the second machine part (2).

9. Clamping device according to one of claims 1 to 8, **characterised in that** the first machine part (1) is a hollow shank tool or a hollow shank tool holding fixture and the second machine part (2) is a work spindle of a machine tool.

## Revendications

1. Dispositif de serrage pour la retenue amovible d'une première partie (1) de machine, munie d'un arbre creux tronconique (3), sur une seconde partie (2) de machine dotée d'un tronc de cône intérieur (4), comprenant une douille de serrage (6) pouvant coulisser axialement dans la seconde partie (2) de machine, et plusieurs griffes de serrage (11) qui sont associées à ladite douille de serrage (6), peuvent coulisser radialement suite à un mouvement axial de cette dernière, et sont pourvues d'une surface de serrage (13) pour venir s'appliquer contre une surface intérieure tronconique (14) de l'arbre creux tronconique (3), **caractérisé par le fait que** la seconde partie (2) de machine renferme, radialement à l'extérieur des griffes de serrage, une douille de coincement (39 ; 48) présentant des zones de coincement (43) douées d'élasticité radiale en vue de la retenue, par frottement, de la première partie (1) de machine.

2. Dispositif de serrage selon la revendication 1, **caractérisé par le fait que** la douille de coincement (39 ; 48) comprend plusieurs fentes longitudinales (42) qui s'étendent dans le sens longitudinal de ladite douille, sont mutuellement distantes dans le sens périphérique, et entre lesquelles sont formées les zones de coincement (43) douées d'élasticité radiale.

3. Dispositif de serrage selon la revendication 2, **caractérisé par le fait que** les zones de coincement (43) possèdent une surface de contact (44) rehaussée pour venir s'appliquer, avec frottement, contre une surface interne (45) à l'intérieur de l'arbre creux tronconique (3).

4. Dispositif de serrage selon la revendication 3, **caractérisé par le fait que** les surfaces de contact (44) des zones de coincement (43) matérialisent une surface annulaire interrompue par les fentes longitudinales (42) et venant s'appliquer contre une surface interne cylindrique (45), dans l'espace intérieur de l'arbre creux tronconique (3).

5. Dispositif de serrage selon la revendication 4, **caractérisé par le fait que**, lorsque la première partie (1) de machine n'est pas insérée, le diamètre extérieur de la douille de coincement (38 ; 41) est plus grand, dans la région des surfaces de contact (44), que le diamètre intérieur de l'arbre creux tronconique (3) dans la région de la surface interne cylindrique (45).

6. Dispositif de serrage selon l'une des revendications 1 à 5, **caractérisé par le fait que** la pression de contact des zones de coincement (43), contre la première partie (1) de machine, peut être réglée.

7. Dispositif de serrage selon l'une des revendications 1 à 6, **caractérisé par le fait que** la douille de coincement (48) se compose de deux parties fendues (49, 50) pouvant coulisser l'une par rapport à l'autre et solidarisées, par vissage, au moyen d'un filetage conique (51).

8. Dispositif de serrage selon l'une des revendications 1 à 7, **caractérisé par le fait que** la douille de coincement (39 ; 48) présente, à son extrémité postérieure, plusieurs appendices d'arrêt (47) distants les uns des autres dans le sens périphérique, en vue du verrouillage axial à demeure de ladite douille de coincement (39 ; 48) dans la seconde partie (2) de machine.

9. Dispositif de serrage selon l'une des revendications 1 à 8, **caractérisé par le fait que** la première partie (1) de machine est un outil à arbre creux ou un logement d'outillage à arbre creux, et la seconde partie (2) de machine est une broche de travail d'une machine-outil.
